# EUROPEAN PATENT APPLICATION

(11) **EP 3 151 183 A1**
(43) Date of publication of application: **05.04.2017**
(21) Application number: 14893561.2
(22) Date of filing: 16.06.2014
(51) Int. Cl.: G06Q 30/02

(54) **ADVERTISING SPACE MANAGEMENT SYSTEM AND SPACE ADJUSTMENT COMPUTER**

(30) Priority: 26.05.2014 JP 2014108455
(71) Applicant: Dentsu Inc., Tokyo 105-7001 (JP)
(72) Inventor: SHIMURA, Akihiro, Tokyo 105-7001 (JP)
(74) Representative: Ström & Gulliksson AB
(86) International application number: PCT/JP2014/003204
(87) International publication number: WO 2015/181861

(57) **Abstract**

A frame coordinating computer 154, upon receiving a bidding popularity from a bid management computer 152(S1), determines whether a multiple-view video frame distributed as a content should be changed to an ad frame (S2). When it is determined that the multiple-view video frame distributed as the content should be changed to an ad frame, a change request is transmitted (S4). A content distributing computer 156P1, upon receiving such a change request (S11), changes one of content frames is changed to an ad frame (S12). Ad frame management system flexibly changes the number of ad frames in accordance with the advertisement demand by dynamically changing the number of ad frames.

## Description

### TECHNICAL FIELD

The present invention relates to an ad frame management system that controls an ad frame transaction market on the Internet delivery, and more particularly to a dynamic switching processing for switching from a content frame to an ad frame, or vice versa.

### BACKGROUND ART

Auctions for banner ad frames directed toward a person requesting to view a content on the Internet are held in order to display effective advertisements together with such content as a news content on the Internet according to a user attribute. Such auctions are held individually at respective timings at which a person requesting to view a content requests a content. Such a system is called a real-time bidding (RTB) platform.

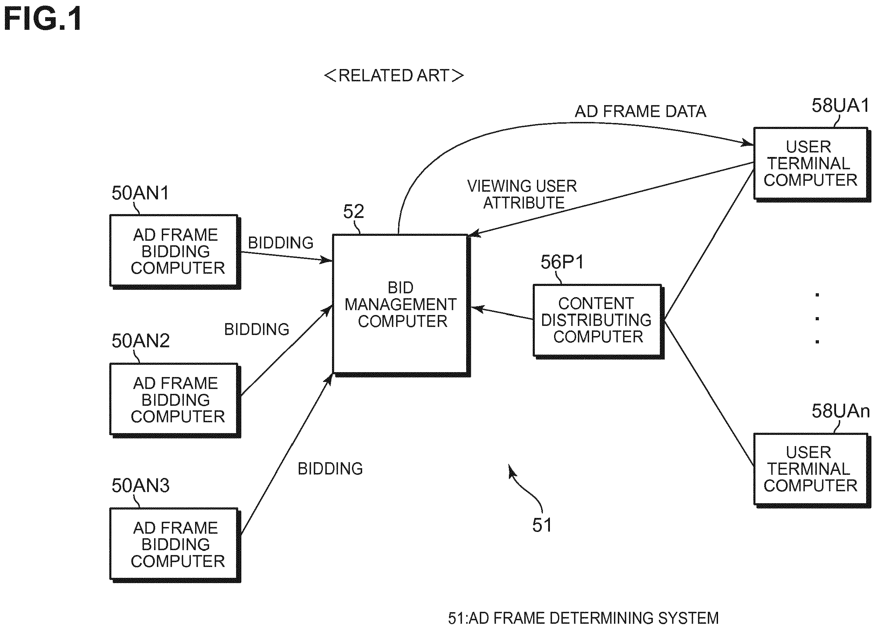

FIG. 1 shows an overview of an ad frame determining system 51. A content distributing computer 56P1 is for distributing a content on which a banner ad frame is to be provided, and includes, for example, a news site and an information providing site. Each of ad frame bidding computers 50AN1 through 50AN3 submits a bid to a bid management computer 52 based on a request from an advertiser. The bid management computer 52 manages bids for the ad frames present in the content of a content distributing computer 56P1.

When a user terminal computer 58UA1 transmits a content view request to the content distributing computer 56P1, the content distributing computer 56P1 transmits the content having a script demanding an advertisement tag included therein, with data within the ad frame being blank. The user terminal computer 58UA1 that has received the content displays the content, and executes this script so as to request an advertisement tag to the bid management compute 52, accompanied by viewing user attributes.

The bid management computer 52 provides the viewing user attributes to the ad frame bidding computers 50AN1 through 50AN3, and requests to bid on the ad frame of the content which is to be transmitted the above-mentioned user terminal computer 58UA1. The ad frame bidding computers 50AN1 through 50AN3 calculate bid prices based on the viewing user attributes in accordance with pre-stored instructions of the advertiser, and respectively submit a bid. At this time, the ad frame bidding computers 50AN1 through 50AN3, in preparation for the case one of them wins the bid, transmit the advertisement tag to the bid management computer 52 together with the bid.

The bid management computer 52 compares the bids submitted by the respective ad frame bidding computers 50AN1 through 50AN3 to process a winning bid. In this case, it shall be assumed that the ad frame bidding computer 50AN1 has won the bid.

The bid management computer 52 transmits the advertisement tag of the ad frame bidding computer 50AN1 that has won the bid to the user terminal computer 58UA1. The user terminal computer 10 acquires and displays a banner ad based on this advertisement tag. Accordingly, in an Internet advertisement, it becomes possible to provide advertisements individually according to the viewing user attributes.

### CITATION LIST

### Non Patent Literature

Non Patent Literature 1: Ad Network System and its Characteristics, Digital Marketing Lab, http://dmlab.jp/adtech/adn.html

### SUMMARY OF INVENTION

### TECHNICAL PROBLEM

However, in the advertising system as described above, there existed a problem that an advertiser cannot necessarily place an advertisement on a computer distributing the desired content. This is because, as is obvious, an advertiser may not be able to win a bid when a competition occurs among a plurality of advertisers. In such a case, for example, when the advertiser is unable to win a popular ad frame having a high advertising effect, the advertiser has no other choice but to place an advertisement on a computer which distributes a content that cannot be expected to provide much advertising effect.

The purpose of the present invention is to solve the problem as described above, or to provide an ad frame management system that can enhance the advertising effect as a whole.

### SOLUTION TO PROBLEM

(1) An ad frame management system according to the present invention includes: a content distributing computer that distributes, to a user terminal computer, a distribution data including an ad frame and a content frame on one screen; a bid management computer that manages bidding of the ad frames according to the real-time bidding platform; and a plurality of ad frame bidding computers that submit bids to the bid management computer, the ad frame management system including a frame coordinating computer having a frame increase/decrease determining means storing therein a rule for increasing/decreasing the number of ad frames and that determines whether to increase/decrease the number of ad frames, the increase/decrease of the number of the ad frames being executed by changing the content frame to the ad frame or changing the ad frame to the content frame without changing the total number of content frames and ad frames, and a change instructing means that gives a frame type change order to the content distributing computer when the frame increase/decrease determining means determines to increase/decrease the number of ad frames.
   Accordingly, the content frame and the ad frame are dynamically interchangeable, and thus the number of ad frames can be increased or decreased. This allows increasing or decreasing the number of ad frames in accordance with the demand for advertisement.
(2) A frame coordinating computer according to the present invention is connected to a content distributing computer that distributes, to a user terminal computer, a distribution data including an ad frame and a content frame on one screen and to a bid management computer that manages bidding of the ad frames according to the real-time bidding platform, the frame coordinating computer including: a frame increase/decrease determining means storing therein a rule for increasing/decreasing the number of ad frames and that determines whether to increase/decrease the number of ad frames, the increase/decrease of the number of the ad frames being executed by changing the content frame to the ad frame or changing the ad frame to the content frame without changing the total number of content frames and ad frames, and a change instructing means that gives a frame type change order to the content distributing computer when the frame increase/decrease determining means determines to increase/decrease the number of ad frames.
   Accordingly, the content frame and the ad frame are dynamically interchangeable, and thus the number of ad frames can be increased or decreased. This allows increasing or decreasing the number of ad frames in accordance with the demand for advertisement.
(3) A content distributing computer according to the present invention is connected to a frame coordinating computer and a user terminal computer, and includes: a distribution request receiving means that receives a distribution request from the user terminal computer for the distribution data; a distribution data storing means that stores a distribution data including an ad frame and a content frame on one screen; and a distribution means that distributes the distribution data upon receiving the distribution request, the content distributing computer including a changing means for changing the distribution data stored in the storing means, upon receiving an order to change the number of frames from the frame coordinating computer, by changing the content frame to the ad frame or changing the ad frame to the content frame without changing the total number of content frames and ad frames so as to increase/decrease the number of ad frames.
   Accordingly, the content frame and the ad frame are dynamically interchangeable, and thus the number of ad frames can be increased or decreased. This allows increasing or decreasing the number of ad frames in accordance with the demand for advertisement.
(4) The ad frame management system or the frame coordinating computer according to the present invention further includes a bidding popularity predicting means that predicts the bidding popularity, wherein the number of ad frames is increased when the bidding popularity is predicted to be high. Thus, it is possible to have the number of ad frames increased in accordance with the bidding popularity predicted in advance. Accordingly, the advertisers can quickly respond to chances for advertising.
(5) In the ad frame management system or the frame coordinating computer according to the present invention, the bidding popularity predicting means predicts that the bidding popularity will be high when the attributes of the content frame to be distributed is related to the attributes of an advertisement having an increased advertisement volume in the mass advertisement. Accordingly, based on the mass advertising trend, a demand for advertisement on the Internet advertisement can be predicted so as to have the number of ad frames increased in advance.
(6) In the ad frame management system or the frame coordinating computer according to the present invention, the content distributing computer stores therein attributes of the content frame to be distributed, and the bidding popularity predicting means predicts that the bidding popularity will be high when the attributes of the content frame to be distributed is related to a category of a keyword searched by a search engine. Accordingly, based on the trend of the keyword on the search engine, a demand for advertisement on the Internet advertisement can be predicted so as to have the number of ad frames increased in advance.
(7) In the ad frame management system or the frame coordinating computer according to the present invention, the content frame is an individual video frame that configures a part of a plurality of multi-view videos. Accordingly, the individual video frame that configures a part of the multi-view videos can be used as the ad frame.
(8) In the ad frame management system or the frame coordinating computer according to the present invention, the content distributing computer declares a frame that is changeable from a content frame to an ad frame in advance, and if there is a distribution request from a different user terminal computer after receiving the order to change the number of frames, the content distributing computer distributes the distribution data at the frame type after the change. Accordingly, the frame coordinating computer can quickly determine whether the content distributing computer is capable of changing a frame to an ad frame.
(9) In the ad frame management system or the frame coordinating computer according to the present invention, the change instructing means makes a query to the content distributing computer as to whether there exists a frame changeable to an ad frame, and if the answer is yes, gives a frame type change order to the content distributing computer. Accordingly, through making a query to the content distributing computer by the frame coordinating computer, the frame type change becomes possible.
(10) In the ad frame management system or the frame coordinating computer according to the present invention, the bid management computer distributes the advertisement data to be displayed in the frame that has been changed to an ad frame to the user terminal computer. Accordingly, the advertisement data can be quickly displayed on the user terminal computer in real-time bidding.
(11) In the ad frame management system or the frame coordinating computer according to the present invention, the bid management computer distributes the advertisement data to be displayed in the frame that has been changed to an ad frame is distributed to the user terminal computer via the content distributing computer. Accordingly, a processing carried out by the bid management computer is simplified.
(12) In the ad frame management system or the frame coordinating computer according to the present invention, the bid management computer having an informing means that informs the ad frame bidding computers that submit bids of the fact that the ad frame subjected to bidding had initially been a content frame which is now turned into an ad frame. Accordingly, the ad frame bidding computer can bid on an ad frame that has newly become an ad frame.
(13) In the ad frame management system or the frame coordinating computer according to the present invention, the bid management computer further having an informing means that informs the ad frame bidding computes that submit bids of the fact that the ad frame subjected to bidding was an ad frame from the start. Accordingly, the ad frame bidding computer can bid on an ad frame that was an ad frame from the start.
(14) An ad frame management system according to the present invention includes: a content distributing computer that distributes, to a user terminal computer, a distribution data including an ad frame and a content frame on one screen; and an ad frame purchasing computer that requests purchasing of the ad frame, the ad frame management system including a frame coordinating computer having a frame increase/decrease determining means storing therein a rule for increasing/decreasing the number of ad frames and that determines whether to increase/decrease the number of ad frames, the increase/decrease of the number of the ad frames being executed by changing the content frame to the ad frame or changing the ad frame to the content frame without changing the total number of content frames and ad frames; and a change instructing means that gives a frame type change order to the content distributing computer when the frame increase/decrease determining means determines to increase/decrease the number of ad frames, wherein the frame increase/decrease determining means changes a content frame to an ad frame when a request to ensure an impression frame having a fixed price is given from the ad frame purchasing computer to the content distributing computer.
   Accordingly, it is prevented from uselessly increasing the number of ad frames when dynamically switching a frame between the content frame and the ad frame.
(15) In the ad frame management system according to the present invention, an impression frame does not designate a specific content distributing computer, but designates the specific attributes of the content, and if the attributes of the content distributing computer and the attributes of which the impression frame is designated are the same, a content frame is changed to an ad frame. Accordingly, changeover to an ad frame is possible only when the attributes are the same. Thus, it can be prevented from uselessly increasing the number of ad frames.
(16) The ad frame management system according to the present invention includes: a bid management computer that manages bidding of the ad frames according to the real-time bidding platform; and a plurality of ad frame bidding computers that submit bids to the bid management computer, wherein the price of the impression and the highest bid for the ad frame which had been changed from the content frame to the ad frame are compared, and the ad frame is sold to the ad frame bidding computer submitting a higher bid. Accordingly, the ad frame which has been changed to an ad frame can be used more efficiently.
(17) An ad frame management system according to the present invention includes: a content distributing computer that distributes, to a user terminal computer, a distribution data including an ad frame and a content frame on one screen; a bid management computer that manages bidding of the ad frames according to the real-time bidding platform; and a plurality of ad frame bidding computers that submit bids to the bid management computer, wherein two types of ad frames are set, namely a fixed ad frame which had initially been an ad frame and a dynamic ad frame which had been changed from the content frame to the ad frame, and which type an ad frame belongs to is specified at the time of bidding, and
   the ad frame bidding computers submit different bid prices for the fixed ad frame and the dynamic ad frame.
   Accordingly, different bid prices can be set for the fixed ad frame and the dynamic ad frame. For example, if a bidder considers that the dynamic ad frame has a higher advertisement effect than the other, different bid prices can be set for the two ad frames.
(18) An ad frame management system according to the present invention includes: a content distributing computer that distributes, to a user terminal computer, a distribution data including an ad frame and a content frame on one screen; a bid management computer that manages bidding of the ad frames according to the real-time bidding platform; and a plurality of ad frame bidding computers that submit bids to the bid management computer, wherein two types of ad frames are set, namely a fixed ad frame which had initially been an ad frame and a dynamic ad frame which had been changed from the content frame to the ad frame, and which type an ad frame belongs to is specified at the time of bidding, and a bid is submitted only for the dynamic ad frame.
(19) In the ad frame management system or the frame coordinating computer according to the present invention, the frame increase/decrease determining means stores therein a rule for increasing the number of ad frames by changing the content frame to the ad frame when the bidding popularity is high. Accordingly, the number of ad frames can be increased when the demand for advertisement becomes higher.
(20) In the ad frame management system or the frame coordinating computer according to the present invention, the bidding popularity is the number of bids submitted. Therefore, if there are a lot of bids, the number of ad frames can be increased.
(21) In the ad frame management system or the frame coordinating computer according to the present invention, the bidding popularity is the highest bid price. Therefore, if the maximum bid price is high, the number of ad frames can be increased.
(22) The ad frame management system or the frame coordinating computer according to the present invention, the rule for increasing/decreasing the number of ad frames is that the number of the frame is increased/decreased in accordance with an operation of an input device on the screen during viewing of the content by the user. Accordingly, the number of ad frames can be varied in accordance with the operation of the input device on the screen during viewing of the content by the user.
(23) In the ad frame management system or the frame coordinating computer according to the present invention, the content frame is an individual video frame that configures a part of a plurality of multi-view videos, and the rule for increasing/decreasing the number of ad frames is that a degree of viewing seriousness is determined in accordance with an operation of an input device on the screen during viewing of the content by the user and that the number of ad frames is varied in accordance with the degree of viewing seriousness. Accordingly, the number of ad frames can be varied in accordance with the degree of viewing seriousness of the user.
(24) In the ad frame management system or the frame coordinating computer according to the present invention, the degree of viewing seriousness is determined by detecting switching rate of the multi-view video screens. Accordingly, the number of ad frames can be increased in accordance with the switching rate of the screens.
(25) In the ad frame management system or the frame coordinating computer according to the present invention, the degree of viewing seriousness is determined by active viewing processing such as a volume adjustment, a display position adjustment, and a screen size adjustment. Accordingly, the number of ad frames can be increased in accordance with the active viewing processing of the user.
(26) In the ad frame management system or the frame coordinating computer according to the present invention, the number of ad frames is increased more the higher the degree of viewing seriousness. Accordingly, it is possible to increase the number of ads displayed on the website viewed by a user with a higher degree of viewing seriousness.
(27) In the ad frame management system or the frame coordinating computer according to the present invention, the number of ad frames is increased more the lower the degree of viewing seriousness. Accordingly, it is possible to increase the number of ads provided for users with lower degree of viewing seriousness.
(28) In the ad frame management system or the frame coordinating computer according to the present invention, the number of frames is increased/decreased in accordance with a fluctuation in the number of viewers per unit time of the content distributing computer. Accordingly, the frame can be increased/decreased in accordance with the fluctuation of the number of viewers per unit time. In the present embodiment, individual pages on which the ad frame is to be displayed was taken as the number of viewers per unit time of the content distributing computer, whoever, the number of viewers for the web page as a whole may also be taken.
(29) In the ad frame management system or the frame coordinating computer according to the present invention, the number of ad frames is increased when the number of viewers of the content is on the increase. Accordingly, more ad frames can be obtained when the number of viewers is on the increase.
(30) In the ad frame management system or the frame coordinating computer according to the present invention, the number of ad frames is decreased when the number of viewers of the content is on the increase. Accordingly, the number of ad frames can be decreased when the number of viewers is on the increase. Thus, it may be prevented from deteriorating the content value for the temporarily increased views.
(31) In the ad frame management system or the frame coordinating computer according to the present invention, the number of frames is increased/decreased in accordance with a click through rate of the advertisement per unit time of the content distributing computer. Accordingly, the number of ad frames can be dynamically increased/decreased in accordance with the click through rate of the advertisement.
(32) In the ad frame management system or the frame coordinating computer according to the present invention, the number of frames is increased if the click through rate of the advertisement per unit time is higher than a threshold value. Accordingly, if the click through rate of the advertisement is high, the number of ad frames can be dynamically increased.
(33) In the ad frame management system or the frame coordinating computer according to the present invention, the number of frames is decreased if the click through rate of the advertisement per unit time is higher than the threshold value. Accordingly, if the click through rate of the advertisement is high, the number of ad frames can be dynamically decreased. Thus, for example, the matching between the contents and the advertisement will become weak, and the click through rate can be prevented from becoming low.

In the present invention, an "ad frame" is not only a term that specifies a space for displaying an advertisement, but also a term that refers to a concept including information that specifies a position to display an advertisement without clarifying the space for displaying the advertisement. Also, an advertisement displayed in an "ad frame" may be of various kinds such as an image (including a video) and text data, further including opinion advertisements and the like.

Features, other objects, use, and advantages of the present invention will become more apparent from the following description of the embodiments when taken in conjunction with the accompanying drawings in which:

### BRIEF DESCRIPTION OF DRAWINGS

FIG. 1 is an overall schematic view illustrating a conventional ad bidding system 51;
FIG. 2 is a view illustrating a group of computers configuring an ad frame management system 100 according to the present invention;
FIG. 3 is a view of an example of a screen to be distributed to a user terminal computer;
FIG. 4 is a view illustrating a hardware configuration of a frame coordinating computer 154;
FIG. 5 is a flowchart illustrating an ad frame increase processing;
FIG. 6 is a functional block diagram illustrating an ad frame management system 360 according to a second embodiment;
FIG. 7 is a functional block diagram illustrating an ad frame management system 370 according to a third embodiment;
FIG. 8 is a functional block diagram illustrating an ad frame management system 380 according to a fourth embodiment;
FIG. 9 is a functional block diagram illustrating an ad frame management system 390 according to a fifth embodiment; and
FIG. 10 is a system overview in the case where a frame coordinating computer is a computer configuring an Supply Side Platform (SSP).

### EMBODIMENTS OF THE INVENTION

### 1. Overall configuration

### Functional block diagram

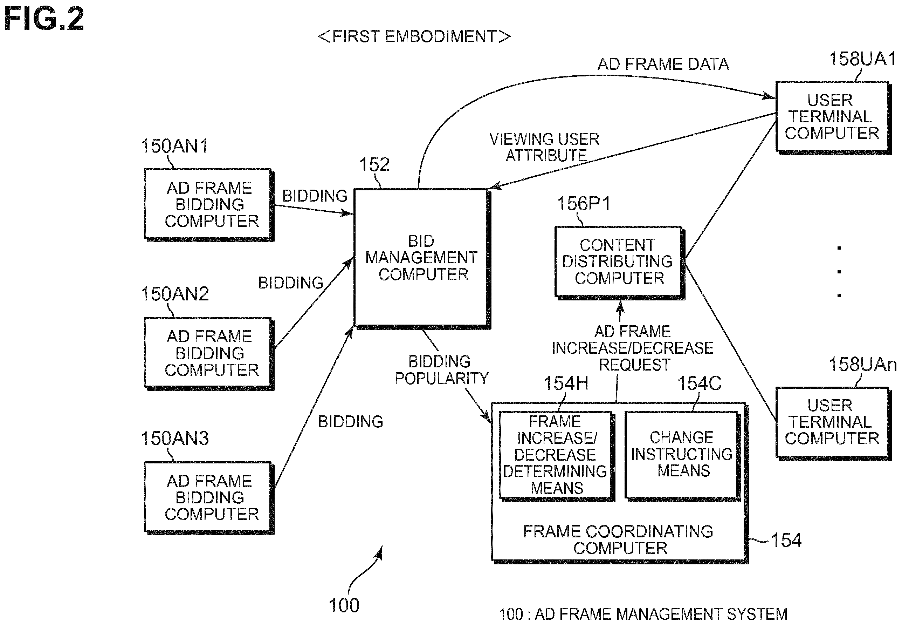

FIG. 2 shows a functional block diagram of an ad frame management system 100 according to the present invention. The ad frame management system 100 includes a plurality of ad frame bidding computers 150AN1 through AN3, a bid management computer 152, a frame coordinating computer 154, a content distributing computer 156P1, and user terminal computers 158UA1 through UAn.

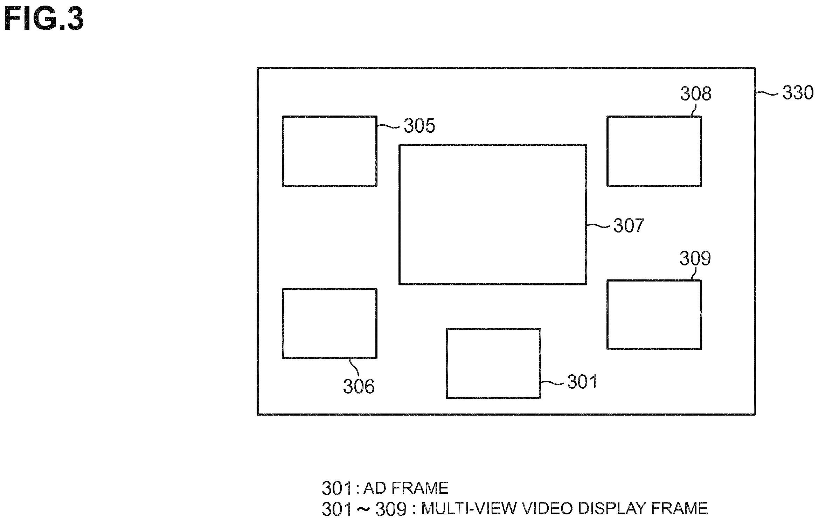

The content distributing computer 156P1 stores therein multi-view video contents including the ad frame 301 and the multi-view video frames 303 through 309, as shown in FIG. 3, and the content distributing computer 156P1 distributes the above-mentioned content upon a distribution request from the user terminal computers 158UA1 through UAn.

The ad frames in the content distributed by the content distributing computer 156P1 are managed by the bid management computer 152. To be specific, each of the ad frame bidding computers 150AN1 through AN3 submits, to the bid management computer 152, a bid price together with advertisement data for the case of winning the bid.

The bid management computer 152 determines the ad frame bidding computer for an ad frame in question, by real-time bidding platform, and transmits, to the user terminal computer 158UA1, the advertisement data added by the winning ad frame bidding computer as the data to be displayed in the ad frame. Accordingly, advertisement data according to the attributes of the user terminal computer can be distributed in the same manner as that of a conventional method.

The bid management computer 152 transmits the number of bids for a current bid to the frame coordinating computer 154.

The frame coordinating computer 154 includes a frame increase/decrease determining means 154H and a change instructing means 154C. The frame increase/decrease determining means 154H has a rule stored therein for increasing/decreasing the number of the ad frames, and determines whether to increase/decrease the number of the ad frames. This increase/decrease of the number of the ad frames are executed by changing a content frame to an ad frame, or changing an ad frame to a content frame without changing the total number of content frames and ad frames.

The change instructing means 154C gives a frame type change order to the content distributing computer 156P1 when the frame increase/decrease determining means 154H determines to increase/decrease the number of the ad frames.

The content distributing computer 156P1, upon receiving a number of frames change order from the frame coordinating computer 154, changes a stored distribution data so as to change a content frame to an ad frame in order to increase the number of ad frames without changing the total number of content frames and ad frames. Therefore, if a different user terminal computer makes a distribution request next, advertisements can be posted at the number of ad frames that has been increased. For example, a multi-view video frame 306 shown in FIG. 3 becomes an ad frame.

### 2. Hardware configuration

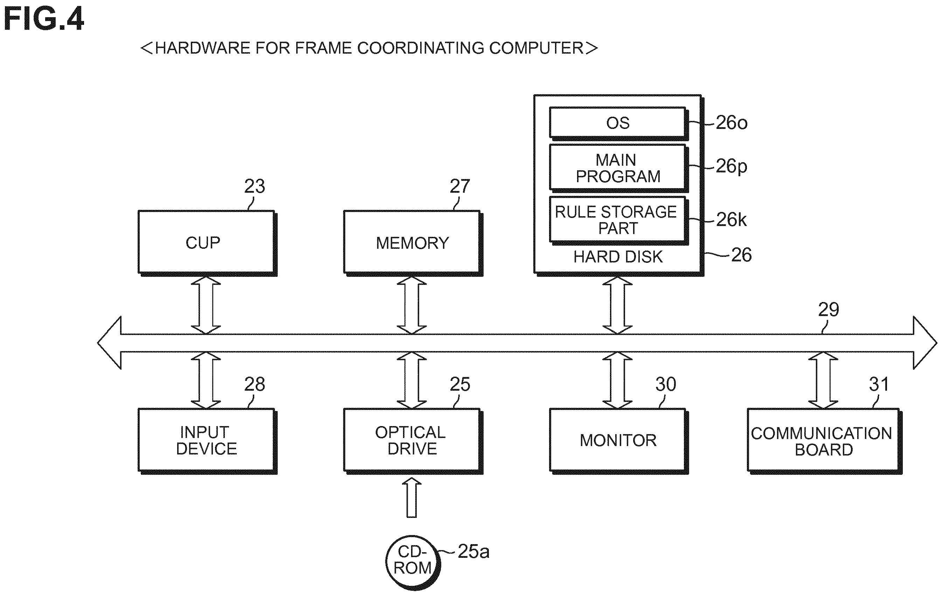

The hardware configuration of the frame coordinating computer 154 in the ad frame management system 100 illustrated in FIG.2 will be described with reference to FIG. 4. FIG. 4 shows an example of the hardware configuration of the frame coordinating computer 154 that is configured using a CPU.

The frame coordinating computer 154 includes a CPU 23, a memory 27, a hard disk 26, a monitor 30, an optical drive 25, an input device 28, a communication board 31, and a bus line 29. The CPU 23 controls respective components via the bus line 29 in accordance with respective programs stored in the hard disk 26.

A hard disk 26 stores therein an operating system program 26o (hereinafter referred to as the OS) and a main program 26p. Processing of the main program 26p will be described later.

A rule storage part 26k stores therein a rule to be applied when switching an individual video frame to an ad frame, as described later.

Note that, in the present embodiment, Windows2008 R2 (registered trademark or trademark) has been adopted as the OS program 26o, however, the OS program 26o is not limited thereto.

The respective above-mentioned programs have been read out from a CD-ROM 25a, in which the programs are stored, via the optical drive 25 to be installed in the hard disk 26. Note that, the programs such as those recorded in a flexible disk (FD) and an IC card, in addition to the CD-ROM, may be installed in the hard disk via a computer-readable recording medium. Further, such a program may be downloaded using a communication line.

In the present embodiment, the program is installed from a CD-ROM into the hard disk 26 so as to indirectly execute the program stored in the CD-ROM by the computer. However, execution of the program is not limited thereto, and the program stored in the CD-ROM may be directly executed by the optical drive 25. Computer-executable programs include those that are directly executable by only installing the program as is, and those that first need to be converted to other forms or the like (for example, decompressing a compressed program, or the like), and further include those that are executable in combination with other module part.

### 3. Processing for changing the number of frames

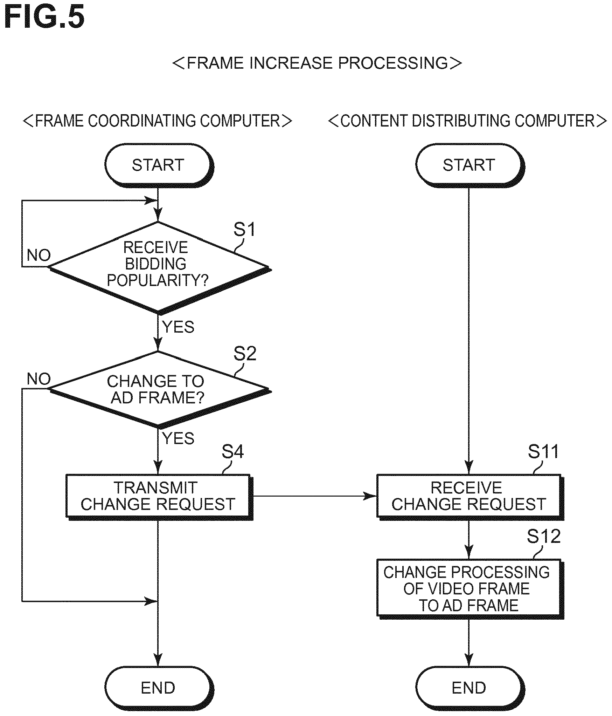

FIG. 5 is a flowchart illustrating a frame increase processing of the frame coordinating computer 154.

The description hereunder is on an example wherein the content distributing computer 156P1 distributes the multi-view video contents including the ad frame 301 and the multi-view video frames 303 to 309, and the multi-view video frame 306 is set so as to be changeable to an ad frame. Further, in the example, when a multi-view video content including the ad frame is transmitted from the content distributing computer 156P1 to the user terminal computer 158UA1 and the ad frame in question had a high bidding popularity, the frame coordinating computer 154 makes a request to increase the number of ad frames by one frame, and accordingly the content distributing computer 156P1 changes the multi-view video frame 306 to an ad frame and distributes the content.

The processing carried out from transmission of the advertisement data of one of the ad frame bidding computers to the user terminal computer 158UA1 to displaying the advertisement data on the user terminal computer 158UA1 is the same as that of the conventional method.

The bid management computer 152 (see FIG. 2) gives information on bidding popularity in relation to the bid in question to the frame coordinating computer 154. In the present embodiment, the number of bids submitted is given as the bidding popularity.

The CPU 23 of the frame coordinating computer 154 determines whether such information on bidding popularity should be accepted (step S1 in FIG. 5). When such information on bidding popularity is accepted, the CPU 23 determines whether the multi-view video frame that distributes the content should be changed to an ad frame based on the rule stored in the rule storage part 26K (step S2).

In the present embodiment, a threshold value is set in advance, and a rule that stipulates that the number of ad frames be increased by one frame if the number of bids submitted exceeds the threshold value is stored.

The CPU 23 of the frame coordinating computer 154 sends a change request when it determines that the multi-view video frame that distributes the content should be changed to an ad frame (step S4 in FIG. 5). Upon receiving such change request (step S11), the content distributing computer 156P1 changes the multi-view video frame to an ad frame (step S12). In the present embodiment, one of the multi-view video frame 306 of the content distributing computer 156P1 is changed to an ad frame.

In other words, now that there are two ad frames, next time the content distributing request is made by a different user terminal computer, two ad frames will be auctioned. Since such bidding processing is the same as that of the conventional method, description thereof will be omitted.

In the present embodiment, the number of bids submitted was adopted as the measurement for bidding popularity, a change rate of the number of bids submitted may also be adopted. Alternatively, a bid price may also be adopted. As the bid price, the highest price among the bidders, the total of the bid prices submitted by the plurality of bidders, and the like can be adopted.

Also, in the present embodiment, when a change request is received from the frame coordinating computer 154k, the content frame is changed automatically to an ad frame. However, the change to an ad frame may also be executed by storing the change rule in the content distributing computer in advance, and upon receiving the afore-mentioned change request, determining whether the change rule applies, and if it does, changing the content frame to an ad frame.

In the present embodiment, the number of ad frames is increased without changing the total number of content frames and ad frames by changing a content frame to an ad frame. However, alternatively, an ad frame may be changed to a content frame to decrease the number of ad frames without changing the total number of content frames and ad frames. By changing the number of ad frames dynamically as thus, the number of ad frames can be changed flexibly in accordance with a demand for the advertisement.

### 4. Second embodiment

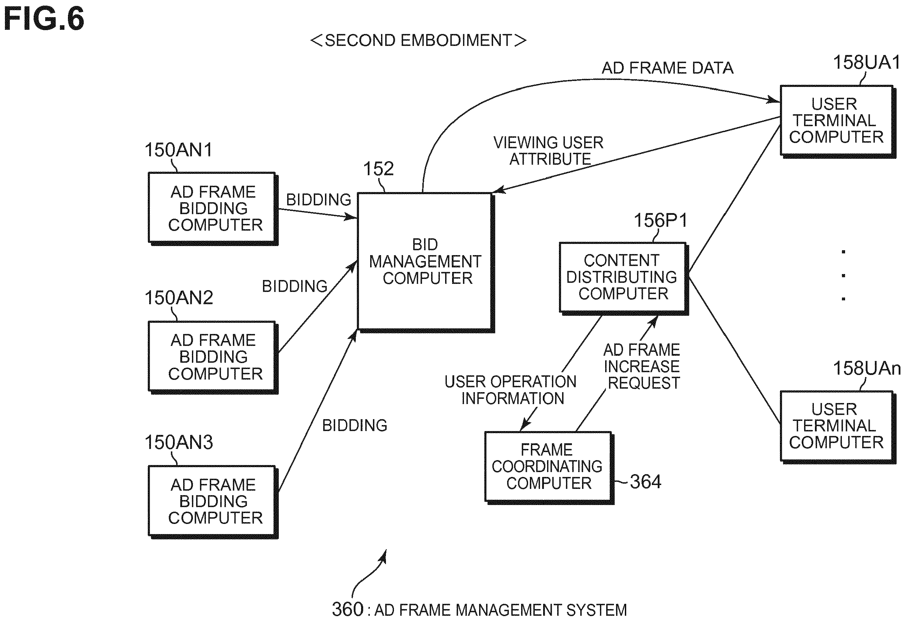

In the first embodiment, the number of ad frames was changed in accordance with the bidding popularity. However, the ad frames may also be changed in accordance with a user operation of the user terminal computer. The processing carried out in this case will be described with reference to FIG. 6.

The processing carried out from transmission of the advertisement data of one of the ad frame bidding computers to the user terminal computer 158UA1 to displaying the advertisement data on the user terminal computer 158UA1 is the same as that of the conventional method. The content distributing computer 156P1 transmits, to a frame coordinating computer 364, user operation information relating to video viewing by the user as a degree of seriousness. The frame coordinating computer 364 varies the number of ad frames in accordance with such degree of seriousness. The degree of seriousness includes, for example, such active viewing processing as the screen switching rate of the multi-view video, a volume adjustment, a display position adjustment, and a screen size adjustment.

Note that, changing a content frame to an ad frame in accordance with the degree of seriousness includes the case of changing a content frame to an ad frame when the degree of seriousness is high and vice versa.

Note that, a known structure may be used to acquire such active viewing processing, for example, a transmission request shall be made to the content distributing computer 156P1 to gather cookie information stored in the user terminal computer.

Accordingly, a content frame to be changed to an ad frame can be changed to an ad frame in accordance with an operation of an input device on the screen during viewing of the content by the user.

Note that, in the present embodiment, a viewing operation history of the terminal itself is acquired by the distributing computer to implement various analyses, however, results obtained by processing the data to some extent at the terminal may be sent to the distribution computer to be stored therein.

### 5. Third embodiment

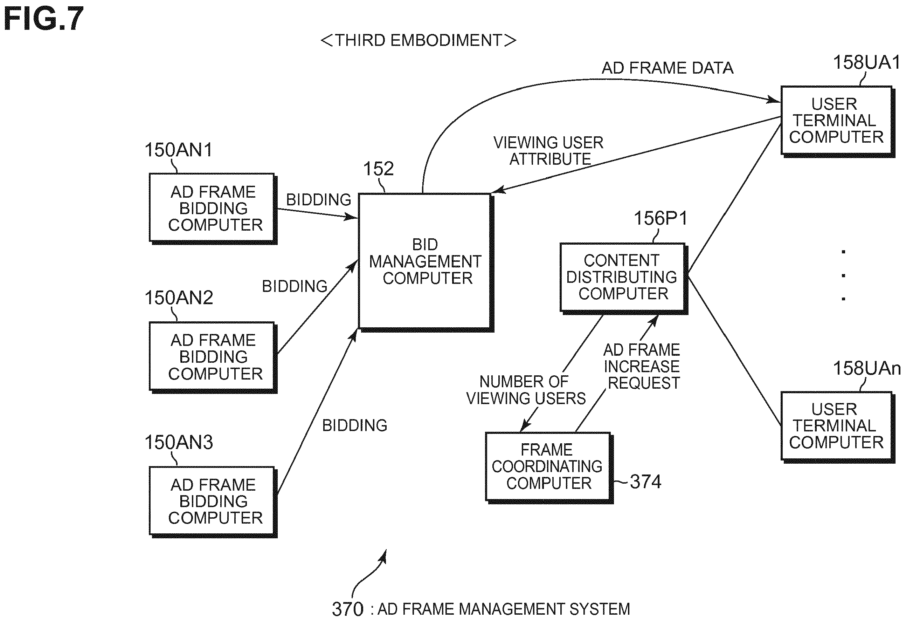

In the second embodiment, the number of ad frames was changed in accordance with the user operation. Instead, the number of ad frames may be changed in accordance with a fluctuation in the number of viewers per unit time of the content distributing computer. The processing carried out in this case will be described with reference to FIG. 7.

The processing carried out from transmission of the advertisement data to displaying the advertisement data on the user terminal computer 158UA1 is the same as that of the conventional method. The content distributing computer 156P1 dynamically transmits the number of Web page viewers to a frame coordinating computer 374. Such gathering of information may also employ cookies and the like in the same manner as described above.

Accordingly, by storing the rule to increase/decrease the number of ad frames in accordance with a fluctuation in the number of viewers per unit time of the content distributing computer, the number of ad frames can be increased when the number of viewers of the content in question increases. Thus, for example, the content with sudden increase in the page view may be determined as a high-valued content at the moment, and the number of ad frames can be increased accordingly. In contrast, the number of ad frames may also be decreased when the number of viewers of the content in question increases. Thus, for example, the content with sudden increase in the page view can be determined as including many poor-quality incoming traffic, that is, viewers just wanting to have a look at the content.

### 6. Fourth embodiment

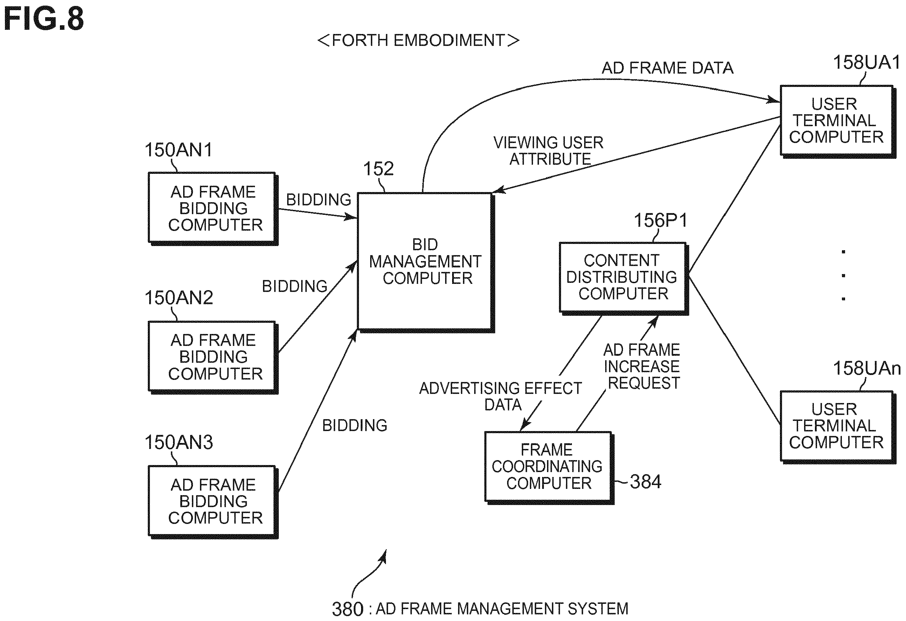

In the third embodiment, the number of ad frames was changed in accordance with the change in page views. Instead, the number of ad frames may be changed in accordance with a fluctuation in the click through rate of the advertisement per unit time of the content distributing computer. The processing carried out in this case will be described with reference to FIG. 8.

The processing carried out from transmission of the advertisement data to displaying the advertisement data on the user terminal computer 158UA1 is the same as that of the conventional method. The content distributing computer 156P1 dynamically transmits the number of Web page views and the number of clicks of the advertisement to a frame coordinating computer 384. The frame coordinating computer 384 determines the number of clicks of the advertisement per unit time to determine the fluctuation in the click through rate of the advertisement per unit time.

Such gathering of information may be carried out by embedding a tag provided exclusively for the frame coordinating computer 384 to send the number of clicks thereto, within the content provided by the content distributing computer 156P1, such that the frame coordinating computer 384 gathers this tag data.

For example, as to the number of ad frames, the number of frames can be caused to be increased if the click through rate of the advertisement per unit time is higher than a threshold value. In this case, the reason for a high click through rate of the advertisement can be determined as being due to a high match rate between the content and the advertisement, improving the advertising effect thereby.

Further, as to the number of ad frames, the number of frames may be caused to be decreased if the click through rate of the advertisement per unit time is higher than the threshold value. Such processing can prevent the overall click through rate from deteriorating, whereas thoughtlessly increased number of advertisements may result in a poor matching between the content and the advertisement.

### 7. Fifth embodiment

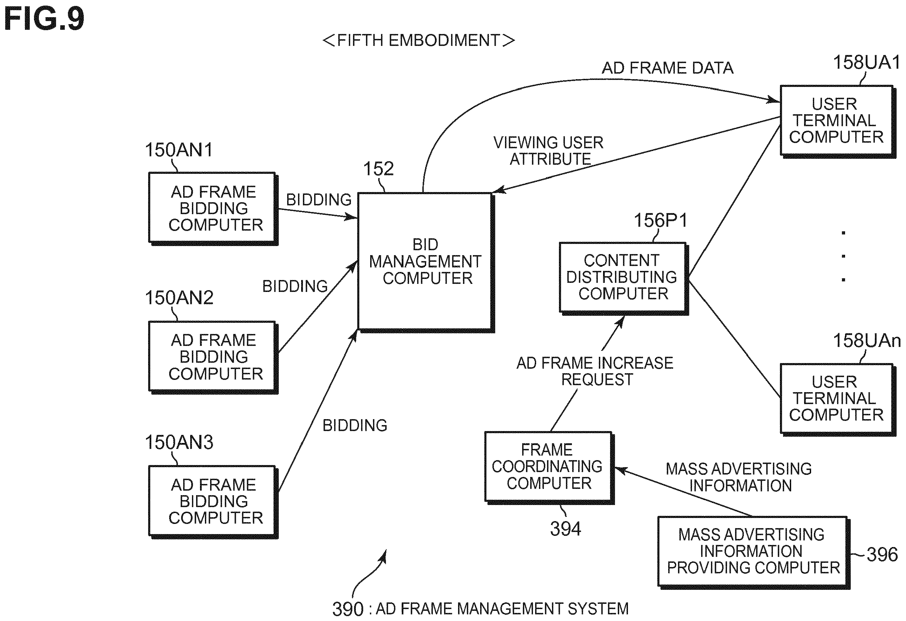

In the above-mentioned first through third embodiments, the ad frames were changed based on events that have already occurred. However, the bidding popularity may be predicted so as to increase the number of ad frames when the bidding popularity is predicted to be high. The processing carried out in this case will be described with reference to FIG. 9.

The processing carried out from transmission of the advertisement data to displaying the advertisement data on the user terminal computer 158UA1 is the same as that of the conventional method. A mass advertising information providing computer 396 transmits the mass advertising trend information to the frame coordinating computer 384. Based on such mass advertising trend information, frame coordinating computer 384 determines the predicted bidding popularity of the content distributing computer 156P1. If the predicted bidding popularity is high, the number of ad frames is increased.

In the present embodiment, to predict the bidding popularity, the frame coordinating computer 384 acquires the gross rating point (GRP) from the mass advertising information providing computer 396. Then, the number of ad frames of the content distributing computer, which distributes a content having the same attribute as the attribute of the advertiser having an increasing the gross rating point, is increased.

For example, if the mass advertisement of an automobile manufacturer A has increased, because the category of the automobile manufacturer A is an "automobile," the number of ad frames in the content distributing computer 156 that distributes the website with a content relating to automobiles is increased.

In the present embodiment, the advertisement demand for an Internet advertisement is tried to be dealt with in advance using the GRP of the mass advertising, however, information other than GRP in the mass advertising may be adopted. For example, KPI for placing an ad in the four major advertising media, such as the advertisement columns in a newspaper, the number of advertisement pages in a magazine, GRP of a television or a radio, or the price of placing advertisements therein, or a sum thereof (combined reach, duplicate reach), and share of voice, and the like can be adopted. Here, share of voice refers to the proportion of advertisement volume of a particular product, company, or a brand with respect to the total advertisement volume of the particular product category. This is a value considered as being important on the idea that the advertising effect is determined by a relative volume (share) in comparison with the competitors rather than the absolute volume of advertisement put in (for example, advertising expenses and GRP).

Such indices may be determined according to the category of the mass-advertised advertisement. In particular, the share of voice may be determined as having a high demand for an Internet advertisement when the share of a particular company in a category in question is low. Reversely, it may also be determined that the demand for the Internet advertisement will become high and therefore the number of ad frames need to be increased when the share of the particular company in the category in question is high.

Further, there are cases where data according to target attributes are available in the four major advertising media, for example, a target rating point (TRP) in the case of a television advertisement. When such type of target-specific information is acquired from the mass advertising information providing computer 396, the target attributes may further be taken into consideration to determine whether the number of ad frames should be increased. It may also be other kind of advertisement placed in accordance with target attributes.

Further, the advertising cost and volume (the number and size) of transportation advertisement and outdoor advertisement may also be adopted besides the four major advertising media.

In the present embodiment, the mass advertising GRP is acquired from the mass advertising information providing computer 396. However, a search engine keyword ranking may be received so as to change an individual frame to an ad frame in a content distributing computer that distributes a content having attributes belonging to the same category as the keyword.

In this way, the advertisement demand may be predicted based on the changes concerning Internet web pages, in advertisements other than the mass advertising. Such changes concerning Internet web pages include, for example, exposure amount in fixed ad frame that is not subject to the Internet real-time bidding, the number of searches, the most frequent keyword of the indexer that is crawling the web page, the page rank, and the number of buzzes.

Further, instead of looking at an overall trend, in the case where the number of viewers of a particular web page as a whole increases, it may be predicted that the demand for an Internet advertisement of the page will be high.

Further, the demand for advertisement may be predicted using other KPI's relating to the demand for stock and market figures.

### 8. Other embodiments

In each of the above-mentioned embodiments, the content frame is changed to an ad frame so as to increase the number of ad frames without changing the total number of content frames and ad frames. However, only the number of ad frames may be increased without decreasing the number of content frames. In this case, it is only necessary to distribute a layout data with increased number of ad frames from the content distributing computer.

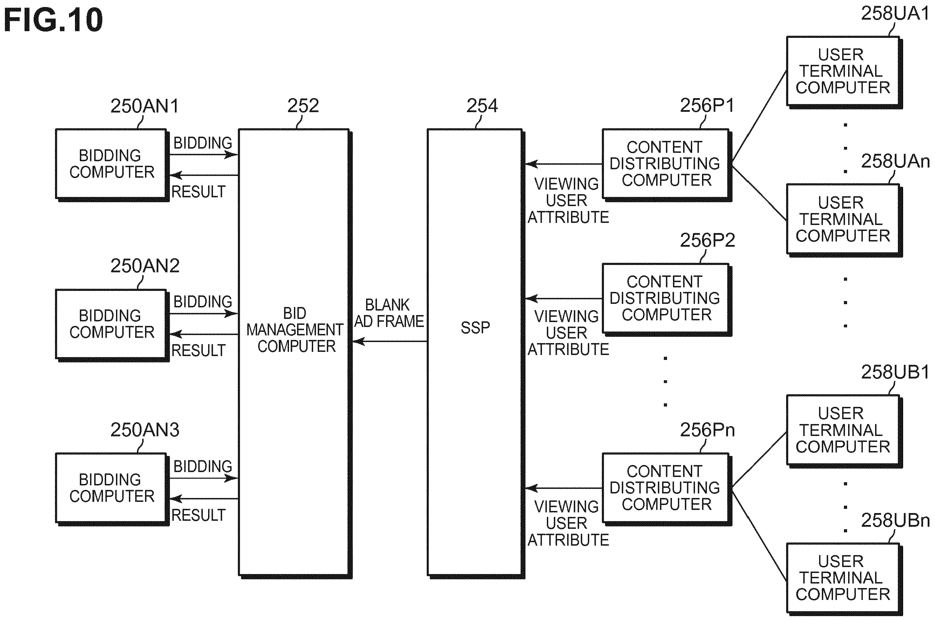

In each of the above-mentioned embodiments, description was given for the case where the frame coordinating computer is provided separately. However, as shown in FIG. 10, the function of the frame coordinating computer may be executed by a computer configuring a supply-side platform (SSP). Instead, the function of the frame coordinating computer may be executed by the content distributing computer or the bid management computer. In FIG. 10, an SSP 254 receives the viewing user attributes from the content distributing computers 256P1-n, analyzes the viewing user attributes, and carries out a processing that optimizes the advertisement in the content distributing computer managed by the SSP 254. Since the change processing to the ad frame is the same as that in each of the above-mentioned embodiments, description thereof will be omitted.

In each of the above-mentioned embodiments, description was given for the case where the content frame to be changed to the ad frame is the individual video frame that configures a part of the multi-view video. However, such content frame is not limited thereto, and it may also be a general content frame.

In each of the above-mentioned embodiments, when the content distributing computer receives an order from the frame coordinating computer, the content distributing computer makes an individual frame that is to be distributed into an ad frame. Instead, it may be carried out as described below. First, whether there exists a content frame that can be changed to an ad frame is declared by a tag or the like in advance. Accordingly, the data is distributed to the user terminal computer in this state. The content distributing computer 156P1, upon receiving an order from the frame coordinating computer, distributes the above-mentioned information regarding changing the above-mentioned tagged frame to an ad frame to the user terminal computer. The user terminal computer comprehends this information, determines the current number of ad frames, and acquires the advertisement data to be displayed in the ad frame from the bid management computer.

Also, in each of the above-mentioned embodiments, when the content distributing computer receives an order from the frame coordinating computer, the content distributing computer makes an individual frame that is to be distributed into an ad frame. Instead, a query may be made to the content distributing computer as to whether change over to an ad frame is possible, and if the answer is yes, such a request may be made.

Further, in each of the above-mentioned embodiments, the advertisement data to be displayed in the frame that has been changed to an ad frame is distributed to the user terminal computer from the bid management computer. However, transmission of the data is not limited to this, and it may be transmitted to the user terminal computer via the content distributing computer instead.

Further, the bid management computer may inform the ad frame bidding computers that submit bids of the fact that the ad frame subjected to bidding had initially been a content frame which is now turned into an ad frame. To the contrary, the bid management computer may inform of the fact that the ad frame subjected to bidding was an ad frame from the start instead of a content frame turned into an ad frame. Accordingly, the ad frame bidding computers can use such information as a reference upon bidding.

When there are a plurality of content frames that are changeable to the ad frames, a priority for changing a content frame to an ad frame may be stored in the content distributing computer, and the content frame may be changed to an ad frame in accordance with the priority.

### 9. Others

In each of the above-mentioned embodiments, the system was run on a real-time bidding platform, as a precondition. However, the present invention may also be executed such that the content frame is changed to an ad frame when a request to secure a predetermined number of impression fames at a predetermined price is given by the computer configuring the demand-side platform (DSP). In this case, the system will be configured as described below.

An ad frame management system including:
a content distributing computer that distributes, to a user terminal computer, a distribution data including an ad frame and a content frame on one screen; and
an advertisement frame purchasing computer that requests purchasing of the ad frame, the ad frame management system including:
   a frame coordinating computer having
   a frame increase/decrease determining means storing therein a rule for increasing/decreasing the number of ad frames and that determines whether to increase/decrease the number of ad frames, the increase/decrease of the number of the ad frames being executed by changing the content frame to the ad frame or changing the ad frame to the content frame without changing the total number of content frames and ad frames, and
   a change instructing means that gives a frame type change order to the content distributing computer when the frame increase/decrease determining means determines to increase/decrease the number of ad frames, wherein
   the frame increase/decrease determining means changes a content frame to an ad frame when a request to ensure an impression frame having a fixed price is given from the ad frame purchasing computer to the content distributing computer.

Note that, the request to ensure an impression frame does not designate a specific content distributing computer, but designates the specific attributes of the content of the content distributing computer. Therefore, if the attributes are the same, a content frame may be changed to an ad frame.

Although it has been described that this system is not necessarily based on real-time bidding, the system may also be used in combination with the real-time bidding. For example, the condition for increasing the number of the ad frames by changing a content frame to an ad frame may be such that there is a request to ensure an impression frame as described above. As to ensuring the number of the ad frame that has been increased, the price for ensuring the impression frame and the highest bid price may be compared, and the higher of the two may be the winner.

In this case, a bid management computer that manages bidding of the ad frames according to the real-time bidding platform, and a plurality of ad frame bidding computers that submit bids to the bid management computer may be added, and the frame coordinating computer may carry out the winning bid processing.

Further, the present invention disclosed above can be comprehended as an invention described below in terms of bidding.

An ad frame management system including:
a content distributing computer that distributes, to a user terminal computer, a distribution data including an ad frame and a content frame on one screen;
a bid management computer that manages bidding of the ad frames according to the real-time bidding platform; and
a plurality of ad frame bidding computers that submit bids to the bid management computer, wherein
two types of ad frames are set, namely a fixed ad frame which had initially been an ad frame and a dynamic ad frame which had been changed from the content frame to the ad frame, and which type an ad frame belongs to is specified at the time of bidding, and
the ad frame bidding computers submit different bid prices for the fixed ad frame and the dynamic ad frame.

In this case, "submit different bid prices" includes, for example, setting a higher bid price for the dynamic ad frame than the fixed ad frame, and further includes submitting a bid only for the frame which had been changed from a content frame to an ad frame without submitting a bid for the initial ad frame.

Further, the present invention can be understood as described below.

An ad frame management system including:
a content distributing computer that distributes, to a user terminal computer, a distribution data including an ad frame and a content frame on one screen;
a bid management computer that manages bidding of the ad frames according to the real-time bidding platform; and
a plurality of ad frame bidding computers that submit bids to the bid management computer, wherein
two types of ad frames are set, namely the fixed ad frame which had initially been an ad frame and the dynamic ad frame which had been changed from the content frame to the ad frame, and which type an ad frame belongs to is specified at the time of bidding, and
the ad frame bidding computers submit bids for the dynamic ad frame only.

In each of the above-mentioned embodiments, the processing related to the distribution to the user terminal was executed by a browser program, and instead dedicated hardware or a software can also be mounted.

In each of the above-mentioned embodiments, URL of the recorded banner ad is transmitted to the user terminal computer 10 as an advertisement tag. However, the method for transmitting the banner ad data is not limited thereto, and for example, the banner ad itself may be transmitted to the user terminal computer. Further, in each of the above-mentioned embodiments, a blank space is transmitted as the ad frame, and the advertisement is inserted based on the advertisement tag. However, information indicating the location to insert the advertisement may be transmitted as the ad frame, and the advertisement may be inserted based on the advertisement tag.

While the present invention has been described above with reference to the embodiments thereof, it should be understood that the embodiments have been described by way of illustration and not limitation, and therefore modifications within the scope of claims attached are possible without deviating from the scope and spirit of the present invention.

## Claims

1. An ad frame management system comprising:
a content distributing computer that distributes, to a user terminal computer, a distribution data including an ad frame and a content frame on one screen;
a bid management computer that manages bidding of the ad frames according to the real-time bidding platform; and
a plurality of ad frame bidding computers that submit bids to the bid management computer,
the frame management system comprising:
a frame coordinating computer having
a frame increase/decrease determining means storing therein a rule for increasing/decreasing the number of ad frames and that determines whether to increase/decrease the number of ad frames, the increase/decrease of the number of the ad frames being executed by changing the content frame to the ad frame or changing the ad frame to the content frame without changing the total number of content frames and ad frames; and
a change instructing means that gives a frame type change order to the content distributing computer when the frame increase/decrease determining means determines to increase/decrease the number of ad frames.

2. A frame coordinating computer connected to a content distributing computer that distributes, to a user terminal computer, a distribution data including an ad frame and a content frame on one screen and to a bid management computer that manages bidding of the ad frames according to the real-time bidding platform, the frame coordinating computer comprising:
a frame increase/decrease determining means storing therein a rule for increasing/decreasing the number of ad frames and that determines whether to increase/decrease the number of ad frames, the increase/decrease of the number of the ad frames being executed by changing the content frame to the ad frame or changing the ad frame to the content frame without changing the total number of content frames and ad frames, and
a change instructing means that gives a frame type change order to the content distributing computer when the frame increase/decrease determining means determines to increase/decrease the number of ad frames.

3. A content distributing computer connected to a frame coordinating computer and a user terminal computer, comprising:
a distribution request receiving means that receives a distribution request from the user terminal computer for the distribution data;
a distribution data storing means that stores a distribution data including an ad frame and a content frame on one screen; and
a distribution means that distributes the distribution data upon receiving the distribution request, the content distributing computer comprising
a changing means for changing the distribution data stored in the storing means, upon receiving an order to change the number of frames from the frame coordinating computer, by changing the content frame to the ad frame or changing the ad frame to the content frame without changing the total number of content frames and ad frames so as to increase/decrease the number of ad frame.

4. The ad frame management system according to claim 1 or the frame coordinating computer according to claim 2, further comprising
a bidding popularity predicting means that predicts the bidding popularity, wherein
the rule is such that the number of ad frames is increased when the bidding popularity is predicted to be high.

5. The ad frame management system or the frame coordinating computer according to claim 4, wherein
the content distributing computer stores therein attributes of the content frame to be distributed, and
the bidding popularity predicting means predicts that the bidding popularity will be high when the attributes of the content frame to be distributed is related to the attributes of an advertisement having an increased advertisement volume in the mass advertisement.

6. The ad frame management system or the frame coordinating computer according to claim 4, wherein
the content distributing computer stores therein attributes of the content frame to be distributed, and
the bidding popularity predicting means predicts that the bidding popularity will be high when the attributes of the content frame to be distributed is related to a category of a keyword searched by a search engine.

7. The ad frame management system or the frame coordinating computer according to any one of claims 1 through 6, wherein
the content frame is an individual video frame that configures a part of a plurality of multi-view videos.

8. The ad frame management system or the frame coordinating computer according to any one of claims 1 through 6, wherein
the content distributing computer declares a frame that is changeable from a content frame to an ad frame in advance, and if there is a distribution request from a different user terminal computer after receiving the order to change the number of frames, the content distributing computer distributes the distribution data at the frame type after the change.

9. The ad frame management system or the frame coordinating computer according to any one of claims 1 through 6, wherein
the change instructing means makes a query to the content distributing computer as to whether there exists a frame changeable to an ad frame, and if the answer is yes, gives a frame type change order to the content distributing computer.

10. The ad frame management system or the frame coordinating computer according to any one of claims 1 through 9, wherein
the bid management computer distributes the advertisement data to be displayed in the frame that has been changed to an ad frame to the user terminal computer.

11. The ad frame management system or the frame coordinating computer according to any one of claims 1 through 9, wherein
the bid management computer distributes the advertisement data to be displayed in the frame that has been changed to an ad frame is distributed to the user terminal computer via the content distributing computer.

12. The ad frame management system or the frame coordinating computer according to any one of claims 1 through 9, wherein
the bid management computer having an informing means that informs the ad frame bidding computers that submit bids of the fact that the ad frame subjected to bidding had initially been a content frame which is now turned into an ad frame.

13. The ad frame management system or the frame coordinating computer according to any one of claims 1 through 9, wherein
the bid management computer further having an informing means that informs the ad frame bidding computes that submit bids of the fact that the ad frame subjected to bidding was an ad frame from the start instead of a content frame turned into an ad frame.

14. An ad frame management system comprising:
a content distributing computer that distributes, to a user terminal computer, a distribution data including an ad frame and a content frame on one screen; and
an advertisement frame purchasing computer that requests purchasing of the ad frame, the ad frame management system comprising:
a frame coordinating computer having
a frame increase/decrease determining means storing therein a rule for increasing/decreasing the number of ad frames and that determines whether to increase/decrease the number of ad frames, the increase/decrease of the number of the ad frames being executed by changing the content frame to the ad frame or changing the ad frame to the content frame without changing the total number of content frames and ad frames; and
a change instructing means that gives a frame type change order to the content distributing computer when the frame increase/decrease determining means determines to increase/decrease the number of ad frames, wherein
the frame increase/decrease determining means changes a content frame to an ad frame when a request to ensure an impression frame having a fixed price is given from the ad frame purchasing computer to the content distributing computer.

15. The ad frame management system according to claim 14, wherein
an impression frame does not designate a specific content distributing computer, but designates the specific attributes of the content, and if the attributes of the content distributing computer and the attributes of which the impression frame is designated are the same, a content frame is changed to an ad frame.

16. The ad frame management system according to claim 14 or 15, further comprising:
a bid management computer that manages bidding of the ad frames according to the real-time bidding platform; and
a plurality of ad frame bidding computers that submit bids to the bid management computer, wherein
the price of the impression and the highest bid for the ad frame which had been changed from the content frame to the ad frame are compared, and the ad frame is sold to the ad frame bidding computer submitting a higher bid.

17. An ad frame management system comprising:
a content distributing computer that distributes, to a user terminal computer, a distribution data including an ad frame and a content frame on one screen;
a bid management computer that manages bidding of the ad frames according to the real-time bidding platform; and
a plurality of ad frame bidding computers that submit bids to the bid management computer, wherein
two types of ad frames are set, namely a fixed ad frame which had initially been an ad frame and a dynamic ad frame which had been changed from the content frame to the ad frame, and which type an ad frame belongs to is specified at the time of bidding, and
the ad frame bidding computers submit different bid prices for the fixed ad frame and the dynamic ad frame.

18. An ad frame management system comprising:
a content distributing computer that distributes, to a user terminal computer, a distribution data including an ad frame and a content frame on one screen;
a bid management computer that manages bidding of the ad frames according to the real-time bidding platform; and
a plurality of ad frame bidding computers that submit bids to the bid management computer, wherein
two types of ad frames are set, namely a fixed ad frame which had initially been an ad frame and a dynamic ad frame which had been changed from the content frame to the ad frame, and which type an ad frame belongs to is specified at the time of bidding, and
a bid is submitted only for the dynamic ad frame.

19. The ad frame management system according to claim 1 or the frame coordinating computer according to claim 2, wherein
the frame increase/decrease determining means stores therein a rule for increasing the number of ad frames by changing the content frame to the ad frame when the bidding popularity is high.

20. The ad frame management system or the frame coordinating computer according to claim 19, wherein
the bidding popularity is the number of bids submitted.

21. The ad frame management system or the frame coordinating computer according to claim 19, wherein
the bidding popularity is the highest bid price.

22. The ad frame management system according to claim 1 or the frame coordinating computer according to claim 2, wherein
the rule for increasing/decreasing the number of ad frames is that the number of the frame is increased/decreased in accordance with an operation of an input device on the screen during viewing of the content by the user.

23. The ad frame management system or the frame coordinating computer according to claim 22, wherein
the content frame is an individual video frame that configures a part of a plurality of multi-view videos, and
the rule for increasing/decreasing the number of ad frames is that a degree of viewing seriousness is determined in accordance with an operation of an input device on the screen during viewing of the content by the user and that the number of ad frames is varied in accordance with the degree of viewing seriousness.

24. The ad frame management system or the frame coordinating computer according to claim 23, wherein
the degree of viewing seriousness is determined by switching rate of the multi-view video screens.

25. The ad frame management system or the frame coordinating computer according to claim 23, wherein
the degree of viewing seriousness is determined by active viewing processing such as a volume adjustment, a display position adjustment, and a screen size adjustment.

26. The ad frame management system or the frame coordinating computer according to claim 23, wherein
the number of ad frames is increased more the higher the degree of viewing seriousness.

27. The ad frame management system or the frame coordinating computer according to claim 23, wherein
the number of ad frames is increased more the lower the degree of viewing seriousness.

28. The ad frame management system according to claim 1 or the frame coordinating computer according to claim 2, wherein
the rule for increasing/decreasing the number of ad frames is that the number of frames is increased/decreased in accordance with a fluctuation in the number of viewers per unit time of the content distributing computer.

29. The ad frame management system or the frame coordinating computer according to claim 28, wherein
the rule is that the number of ad frames is increased when the number of viewers of the content is on the increase.

30. The ad frame management system or the frame coordinating computer according to claim 28, wherein
the rule is that the number of ad frames is decreased when the number of viewers of the content is on the increase.

31. The ad frame management system according to claim 1 or the frame coordinating computer according to claim 2, wherein
the rule for increasing/decreasing the number of ad frames is that the number of frames is increased/decreased in accordance with a click through rate of the advertisement per unit time of the content distributing computer.

32. The ad frame management system or the frame coordinating computer according to claim 31, wherein
the rule is that the number of frames is increased if the click through rate of the advertisement per unit time is higher than a threshold value.

33. The ad frame management system or the frame coordinating computer according to claim 31, wherein
the rule is that the number of frames is decreased if the click through rate of the advertisement per unit time is higher than the threshold value.
